# EUROPÄISCHE PATENTSCHRIFT

(11) **EP 1 591 712 B1**
(45) Veröffentlichungstag und Bekanntmachung des Hinweises auf die Patenterteilung: **07.05.2008**
(21) Anmeldenummer: 05006194.4
(22) Anmeldetag: 22.03.2005
(51) Int. Cl.: F16L 41/08, F16L 41/02, F16L 25/00

(54) **Bausatz für eine Rohr-Verbindung und dessen Verwendung**
Pipe-connecting arrangement and its application
Tuyau de connection et sa application

(30) Priorität: 28.04.2004 DE 102004020929
(43) Veröffentlichungstag der Anmeldung: 02.11.2005
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred

(56) Entgegenhaltungen:
- EP-A- 0 913 534
- EP-A- 1 310 604
- US-A- 4 772 389

## Beschreibung

Die Erfindung betrifft einen Bausatz für eine Rohr-Verbindung und dessen Verwendung.

Bei Abwasser-Kanälen, und zwar insbesondere bei solchen, die primär zur Abführung von Oberflächenwasser, d. h. Regenwasser eingesetzt werden, tritt häufig das Problem auf, dass nachträglich weitere Anschlüsse für Straßeneinläufe, d. h. zur Abführung des in Straßenabläufe eintretenden Regenwassers geschaffen werden müssen. Insbesondere wenn die Kanal-Rohrleitungen aus Betonrohren gebildet sind, bringt dies einen erheblichen Arbeitsaufwand mit sich, da dann ein Betonrohr angebohrt und ein Zulauf - in der Regel am Rohrscheitel - eingesetzt bzw. einbetoniert werden muss. Um diesen Aufwand zu reduzieren, ist aus dem DE 94 07 435 U1 bekannt geworden, ein Verbindungsstück aus hartem Kunststoff in eine im Betonrohr auszubildende Bohrung einzusetzen, wobei zwischen diesem Verbindungsstück und dem Betonrohr eine Dichtungsmanschette aus gummiartigem Material angeordnet wird. An diese als Verbindungsstutzen dienenden Verbindungsstücke können Vollwandrohre, beispielsweise aus PVC, direkt angeschlossen werden. Durch diese Maßnahme wird zwar das Einbetonieren von Verbindungsstücken eingespart, grundsätzlich ist der Arbeitsaufwand aber nach wie vor sehr groß.

Da Betonrohre als Kanal-Rohre sehr schwer und damit nur aufwändig zu verlegen und insgesamt recht teuer sind, werden sie in der Praxis zunehmend durch Profilrohre aus Kunststoffen, insbesondere Verbund-Wellrohre, ersetzt, die bei sehr geringem Gewicht eine hohe Scheiteldruckfestigkeit aufweisen. Da diese Verbund-Wellrohre oder sonstige Profilrohre eine verrippte oder gewellte Außenstruktur haben, ist ein mediendichter Anschluss von Abwasser-Zuführ-Rohren grundsätzlich sehr schwierig. Aus der DE 202 04 227 U1 ist es hierzu bekannt geworden, in ein Verbund-Wellrohr Öffnungen zu schneiden und einen mehrteiligen Anschlussstutzen von außen aufzusetzen und zu verspannen. Diese Lösung ist außerordentlich aufwändig, da die Anschluss-Elemente dem jeweiligen Nenndurchmesser des Rohres und der herstellerabhängigen Außenprofilierung angepasst werden müssen.

Allen bekannten Lösungen haftet zusätzlich der Nachteil an, dass ein mediendichter Anschluss der Anschluss-Elemente nicht gewährleistet ist, so dass entweder ein Eindringen von Flüssigkeiten in das Rohr oder auch ein Austreten von Flüssigkeiten aus dem Rohr nicht sicher vermieden wird.

Ein Bausatz mit den Merkmalen des Oberbegriffs des Anspruchs 1 ist aus EP-A-0 913 534 bekannt.

Der Erfindung liegt die Aufgabe zugrunde, einen Bausatz für eine Rohr-Verbindung zu schaffen, bei dem die Anschluss-Elemente in weiten Bereichen von der Nennweite des jeweiligen Rohres unabhängig sind und bei dem gleichzeitig eine mediendichte Verbindung zwischen Anschluss-Elementen und Rohr gewährleistet ist.

Diese Aufgabe wird erfindungsgemäß durch die Merkmale des Anspruches 1 gelöst. Der Kern der Erfindung liegt darin, dass die Anschluss-Elemente an eine flache Anschluss-Fläche des jeweiligen Rohres angeschlossen werden können, dass also keine unmittelbare Anpassung der Anschluss-Elemente an die Außen-Profilierung und die Nennweite des jeweiligen Rohres erfolgen muss. Weiter erfolgt die Abdichtung zwischen Anschluss-Element und Rohr durch eine radiale Einspannung bzw. Verspannung des Dichtungs-Rings zwischen der Außenwand des Anschluss-Elementes und dem die Öffnung begrenzenden Rand der plattenförmigen Anschluss-Fläche. Da die Anschluss-Fläche in radialer Richtung eine hohe Steifigkeit aufweist, also nur begrenzt verformbar ist, wird eine hohe Dichtkraft gewährleistet. Dies wird weiterhin dadurch gewährleistet, dass die Anschluss-Elemente üblicherweise durch Spritzgießen, also mit hoher Genauigkeit bzw. niedrigen Toleranzen hergestellt werden. Die Öffnung wird mittels eines geeigneten Bohrers geschnitten und hat daher auch ein sehr präzises Maß. Die Abdichtwirkung ist erheblich größer, als wenn die Abdichtung gegenüber der Auflagefläche in Richtung der Mittel-Achse der Auflage-Fläche bzw. der in ihr angebrachten Öffnung erfolgen würde, da in dieser Richtung die Auflage-Fläche verhältnismäßig nachgiebig ist.

Die Weiterbildung nach Anspruch 2 gewährleistet einen sicheren Sitz der Dichtung in der Öffnung.

Die Dichtwirkung wird durch die Weiterbildung nach Anspruch 3 noch erhöht.

Durch die Weiterbildung nach Anspruch 4 wird zum einen noch ein zusätzlicher Dichteffekt herbeigeführt. Darüber hinaus wird eine elastisch axiale Verspannung zwischen dem Anschluss-Element und dem Rohr erreicht. Dies kommt besonders zum Tragen, wenn die Verbindung zwischen Anschluss-Element und Rohr mit den Mitteln nach Anspruch 5 bewirkt wird, die durch die Merkmale der Ansprüche 6 bis 10 weitergebildet werden.

Die erfindungsgemäßen Maßnahmen können gemäß Anspruch 11 vorteilhaft angewendet werden, wenn an das jeweilige Anschluss-Element ein Abwasser-Zuführ-Rohr angeschlossen wird, wie es beispielsweise in der nicht vorveröffentlichten DE-Patentanmeldung 10 2004 002 574.6 dargestellt und beschrieben ist. Die erfindungsgemäßen Maßnahmen können gemäß Anspruch 12 aber auch eingesetzt werden, wenn über das jeweilige Anschluss-Element ein Schacht angeschlossen wird, wie es beispielsweise in der ebenfalls nicht vorveröffentlichten DE-Patentanmeldung 10 2004 010 307.7 dargestellt und beschrieben ist. Die erfindungsgemäßen Maßnahmen können schließlich gemäß Anspruch 13 auch eingesetzt werden, wenn über das jeweilige Anschluss-Element Rohrleitungen an einen Schacht angeschlossen werden, wie es beispielsweise in der EP 0 913 534 A1 (= US-PS 6,044,591) dargestellt und beschrieben ist.

Weitere Merkmale, Vorteile und Einzelheiten der Erfindung ergeben sich aus der nachfolgenden Beschreibung von Ausführungsbeispielen der Erfindung anhand der Zeichnung. Es zeigt
- Fig. 1: einen zu einer Kanal-Rohrleitung verlegten Rohr-Bausatz mit angeschlossenen Abwasser-Zuführ-Rohren,

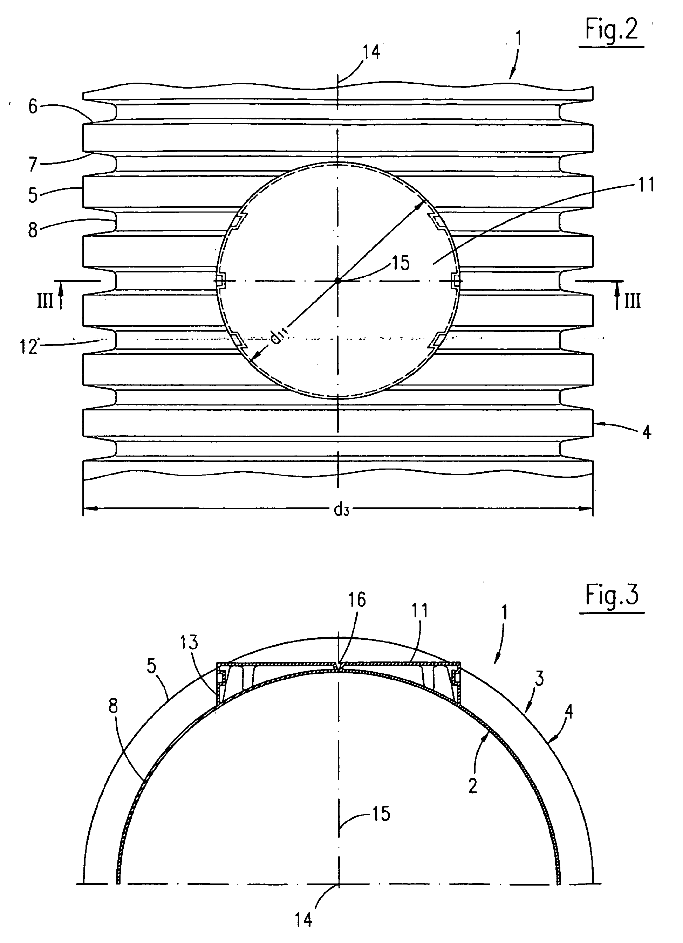

- Fig. 2: eine Teil-Draufsicht auf ein Rohr entsprechend dem Sichtpfeil II in Fig. 1,
- Fig. 3: einen Querschnitt durch das Rohr gemäß der Schnittlinie III-III in Fig. 2,
- Fig. 4: eine Darstellung entsprechend Fig. 3 nach dem Anbringen von Öffnungen und dem Einsetzen eines Dichtungsrings,
- Fig. 5: eine Darstellung entsprechend den Fig. 3 und 4 mit einem am Rohr befestigten Anschluss-Stutzen,
- Fig. 6: einen vergrößerten Teilausschnitt aus Fig. 5,
- Fig. 7: eine Darstellung gemäß Fig. 6 mit einem abgeänderten Dichtungsring,
- Fig. 8: eine vergrößerte Darstellung aus Fig. 4 mit einem abgewandelten Dichtungsring und
- Fig. 9: einen Schacht mit an diesen angeschlossenen Abwasser-Rohren.

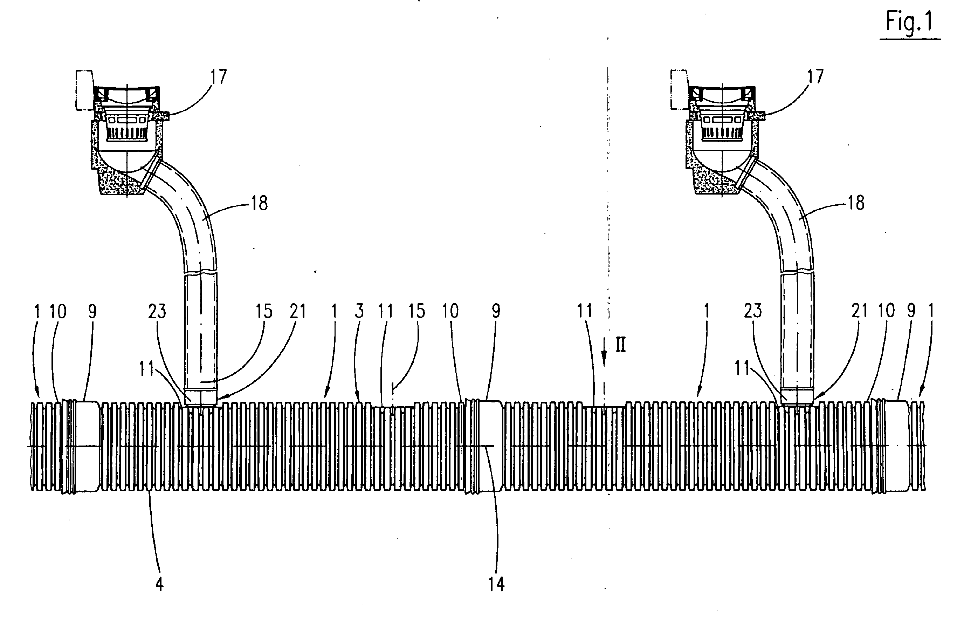

Der in Fig. 1 dargestellte Rohr-Bausatz besteht aus im Prinzip gleichen Rohren 1, die als Verbund-Wellrohre bzw. Doppelwand-Wellrohre ausgebildet sind. Sie bestehen aus einem glattwandigen, also im Wesentlichen zylindrischen Innenrohr 2 und einem gewellten Außenrohr 3. Das Außenrohr 3 weist Wellungen 4 auf, die jeweils eine im Wesentlichen ringzylindrische Außen-Umfangsfläche 5, seitliche Flanken 6, 7 und einen ebenfalls wieder im Wesentlichen ringzylindrischen Fußbereich 8 zwischen den Flanken 6, 7 zweier benachbarter Wellungen 4 aufweisen. In den Fußbereichen 8 ist das Außenrohr 3 jeweils mit dem Innenrohr 2 verschweißt. Innenrohr 2 und Außenrohr 3 bestehen aus miteinander verschweißten Kunststoffen.

Jeweils an einem Ende eines Rohres 1 ist eine Muffe 9 ausgebildet, also ein erweiterter Abschnitt, der beim Zusammenstecken zweier benachbarter Rohre dessen der Muffe 9 abgewandtes Ende, also das sogenannte Spitzende 10, aufnimmt. Die Herstellung solcher Rohre 1 mit inline angeformter Muffe 9 ist beispielsweise aus der EP 0 563 575 A1 (entsprechend US-PS 5,320,797) bekannt. Die Muffe 9 kann selbstverständlich auch durch nachträgliches Aufweiten, durch sogenanntes Aufmuffen, eines ohne Muffe hergestellten Rohres erzeugt werden. Gleichermaßen kann ein muffenloses Rohr verwendet werden, wobei zum Zusammenfügen zweier benachbarter Rohre eine Doppel-Steck-Muffe eingesetzt wird. Die Muffen 9 und die Spitzenden 10 bilden Verbindungs-Elemente.

Jedes Rohr 1 weist zwischen seinen beiden Enden, also zwischen der Muffe 9 und dem Spitzende 10, eine oder mehrere, im vorliegenden Fall zwei, flache, kreisförmige, ebene Anschluss-Flächen 11 auf. Sie weisen jeweils zweckmäßigerweise den gleichen Durchmesser d₁₁ auf. Dieser ist deutlich kleiner als der Außendurchmesser d₃ des Außenrohres 3. Es gilt: d₁₁≤ 0,5 d₃.

Die Anschluss-Flächen 11 sind aus dem Außenrohr 3 ausgeformt, d. h. auch unterhalb der Anschluss-Flächen 11 ist das Innenrohr 2 als im Wesentlichen zylindrisches Rohr ausgebildet. Im Bereich der zwischen zwei benachbarten Wellungen befindlichen Wellentäler 12 weist die Anschluss-Fläche 11 daher jeweils eine seitliche Stützwand 13 auf. Im Bereich der durch die Mittel-Längs-Achse 14 des Rohres 1 gehenden Mittel-Achse 15 jeder Anschluss-Fläche 11 weist die Anschluss-Fläche 11 einen nur sehr geringen Abstand zum Innenrohr 2 auf. Aus den vorgenannten Gründen steht die Anschluss-Fläche 11 nicht oder nur wenig über die AußenUmfangsflächen 5 des Außenrohres 3 vor. Sie ist in diesem Bereich mit dem Innenrohr 2 mittels eines hohlen Zentrier-Abschnitts 16 verbunden. Die Anschluss-Flächen 11 eines jeden Rohres 1 liegen auf einer gemeinsamen Mantellinie, d. h. ihre Mittel-Achsen 15 und die Mittel-Längs-Achse 14 liegen in einer gemeinsamen Radial-Ebene zur Mittel-Längs-Achse 14.

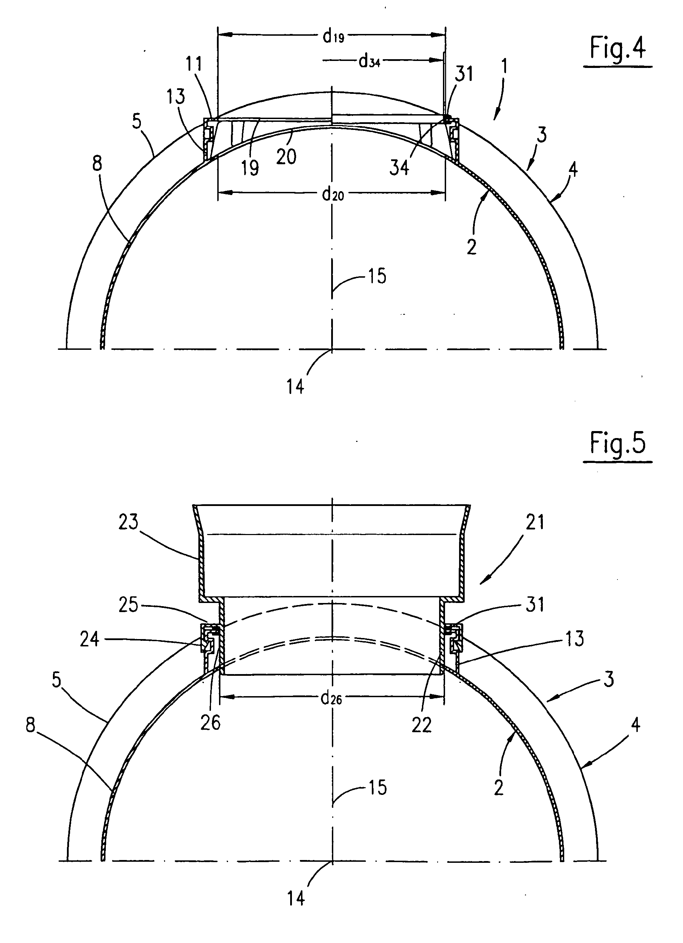

Wenn an einen, beispielsweise als Abwasserkanal, verlegten Rohr-Bausatz in Fig. 1 lediglich angedeutete Straßenabläufe 17, d. h. Abwassereinläufe, mittels ebenfalls als Verbundrohre ausgebildeten Abwasser-Zuführ-Rohren 18 angeschlossen werden sollen, dann wird zuerst mittels eines Kronenbohrers eine kreisförmige Öffnung 19 in die Anschluss-Fläche 11 und anschließend im selben Arbeitsgang eine hierzu konzentrische Öffnung 20 in das Innenrohr 2 geschnitten, wie Fig. 4, 5 und 8 entnehmbar ist. Der Kronenbohrer wird hierzu im Zentrier-Abschnitt 16 der Anschluss-Fläche 11 zentriert.

Um ein Abwasser-Zuführ-Rohr 18 anschließen zu können, wird in die Öffnungen 19, 20 ein Anschluss-Stutzen 21 als Anschluss-Element eingesetzt, der einen dem Durchmesser der Öffnungen 19, 20 angepassten zylindrischen Anschluss-Abschnitt 22 aufweist, der also durch die Öffnungen 19, 20 in das Rohr 1 eingeschoben wird. Der Anschluss-Stutzen 21 weist weiterhin einen dann außerhalb des Rohres 1 befindlichen Anschluss-Abschnitt 23 auf, der nach Art einer Muffe ausgebildet ist und in den das Abwasser-Zuführ-Rohr 18 eingeschoben wird.

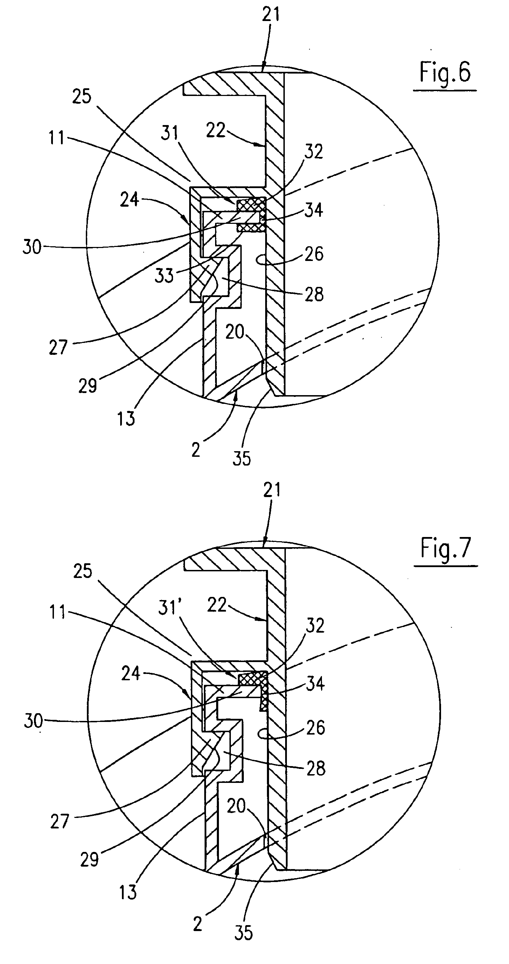

Zur Befestigung des Anschluss-Stutzens 21 am Rohr 1 sind am Anschluss-Abschnitt 22 Verriegelungs-Stege 24 einstückig ausgebildet. Diese sind an einem Ringsteg 25 ausgebildet, der wiederum radial von der Außenwand 26 des Anschluss-Abschnitts 22 radial vorsteht. Die Verriegelungs-Stege 24 erstrecken sich parallel zur Außenwand 26. Am unteren freien Ende jedes Verriegelungs-Steges 24 ist ein zum Anschluss-Abschnitt 22, also nach innen, gerichteter widerhakenförmiger Riegel 27 ausgebildet. In der Stützwand 13 der ringförmigen Anschluss-Fläche 11 sind nach innen gerichtete Riegel-Aufnahmen 28 ausgebildet, die den Verriegelungs-Stegen 24 mit Riegel 27 angepasst sind. Wenn ein Anschluss-Stutzen 21 in die Öffnungen 19, 20 eingeschoben wird, dann werden die Verriegelungs-Stege 24 durch Auflaufen der schrägen Auflauf-Flächen 29 der Riegel 27 auf die Stützwand 13 radial zur Achse 15 elastisch aufgebogen, bis der Anschluss-Stutzen 21 ausreichend weit in die Öffnung 19 der Anschluss-Fläche 11 eingeschoben ist. Dann rasten die Riegel 27 elastisch in die Riegel-Aufnahmen 28 ein, wie es in den Figuren 6 und 7 dargestellt ist. Die Elastizität der Verriegelungs-Stege 24 rührt daher, dass die Anschluss-Stutzen 21 ― gleichermaßen wie die Rohre 1 - aus elastischem, in der Regel hartelastischem Kunststoff hergestellt sind.

Wie insbesondere den Figuren 4 ff. entnehmbar ist, ist der Durchmesser d₁₉ der Öffnung 19 kleiner als der Durchmesser d₁₁ der Anschluss-Fläche 11, so dass von der Stützwand 13 ein Ring-Rand 30 der Anschluss-Fläche 11 nach innen vorsteht, der nach innen die Riegel-Aufnahmen 28 überragt. Auf diesen Rand 30 wird ein Dichtungs-Ring 31 aufgesetzt, der in der Ausgestaltung nach den Figuren 4 bis 6 und 8 einen U-förmigen Querschnitt aufweist. Der Dichtungs-Ring 31 weist also - im Querschnitt - einen oberen Dichtungs-Flansch 32, einen unteren Halte-Flansch 33 und einen diese beiden Flansche 32, 33 miteinander verbindenden Dichtungs-Steg 34 auf.

Die Außenwand 26 des Anschluss-Abschnitts 22 weist einen Außendurchmesser d₂₆ auf, der kleiner ist als der Durchmesser d₁₉ der Öffnung 19, aber größer als der Innendurchmesser d₃₄ des Dichtungs-Stegs 34 in unverformtem Zustand. Um das Einschieben des Anschluss-Abschnitts 22 in die bereits auf den Rand 30 aufgesetzte Dichtung 31 zu erleichtern, weist der Anschluss-Abschnitt 22 an seinem unteren freien Ende einen verjüngten Einführ-Abschnitt 35 auf. Beim Einschieben des Anschluss-Abschnitts 22 in den Dichtungs-Ring 31 wird dieser radial nach außen gepresst und liegt nach dem Einschieben des Anschluss-Abschnitts 22 mit seinem Dichtungs-Steg 34 dichtend einerseits gegen den Rand 30 und andererseits gegen die Außenwand 26 des Anschluss-Abschnitts 22 an. Das Einrasten der Riegel 27 in die Riegel-Aufnahmen 28 erfolgt unter Zusammendrücken des Dichtungs-Flansches 32 der Dichtung 31 zwischen dem Ringsteg 25 und der ringförmigen Anschluss-Fläche 11. Die Haupt-Dichtfunktion ist also zwischen dem Rand 30 und der Außenwand 26 des Anschluss-Abschnitts 22 gegeben. Die Haupt-Dichtwirkung erfolgt also durch den zwischen diesen beiden Teilen liegenden Dichtungs-Steg 34 des Dichtungs-Rings 31. Der Dichtungs-Flansch 32 bewirkt nur eine zusätzlich Abdichtung.

Der Durchmesser d₂₀ ist kleiner als der Durchmesser d₁₉. Der Durchmesser d₂₀ ist gleich oder geringfügig größer als der Durchmesser d₂₆ des Anschluss-Abschnitts 22, so dass letzterer nach dem Einschieben seitlich in der Öffnung 20 geführt wird. Dies führt zu einer Verkantungssicherung des Anschluss-Stutzens 21 im Rohr 1. Der Ringsteg 25 hat die Funktion einer axialen Stabilisierung des Anschluss-Stutzens 21 im Rohr 1.

Wie Fig. 7 entnehmbar ist, kann der Dichtungs-Ring 31' auch im Querschnitt L-förmig ausgebildet sein und lediglich einen oberen Dichtungs-Flansch 32 und einen Dichtungs-Steg 34 aufweisen. Der Dichtungsmechanismus ist hierbei der gleiche wie zuvor geschildert.

Die Öffnung 19 lässt sich - wie gesagt - mit einem Kronenbohrer schneiden, so dass der Durchmesser d₁₉ der Öffnung und damit des Randes 30 sehr exakt ist. Die Anschluss-Stutzen 21 werden durch Spritzgießen hergestellt, haben also sehr exakte Abmaße, d. h. sehr geringe Fertigungstoleranzen. Die Dichtigkeit der geschilderten Verbindung im Bereich des Dichtungs-Stegs 34 ist also sehr hoch.

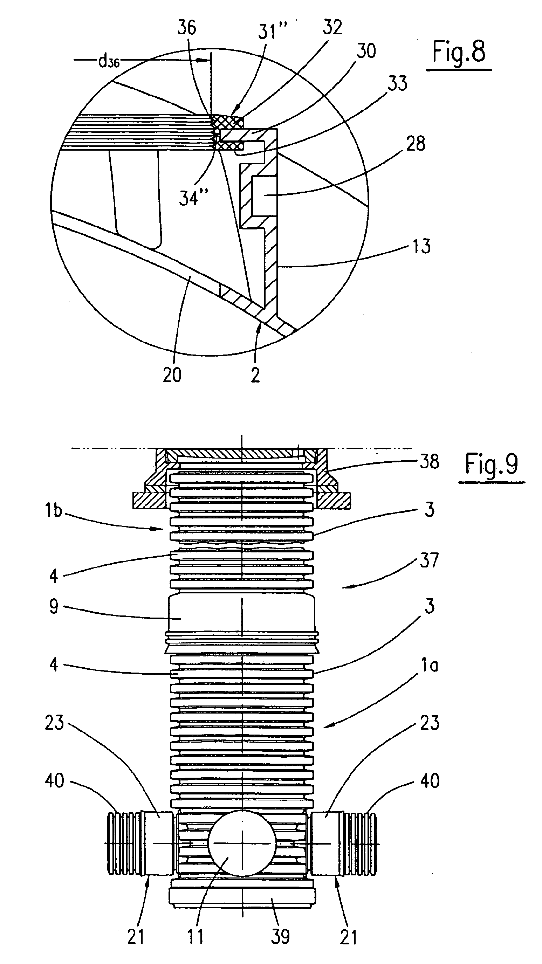

Zur Erhöhung der Dichtwirkung kann der Dichtungs-Ring 31 " gemäß der Darstellung in Figur 8 mit Dichtungs-Lippen 36 mit einem Innendurchmesser d₃₆ im Bereich des Dichtungs-Steges 34" versehen sein, die gegen die Außenwand 26 des Anschluss-Abschnitts 22 anliegen und damit zu einer weiteren Erhöhung der Dichtwirkung beitragen. Es gilt also auch hier: d₃₆ < d₂₆.

Die Verriegelung zwischen Anschluss-Stutzen 21 und Rohr 1 kann auch durch am Anschluss-Abschnitt 22 ausgebildete, nach außen vorspringende, widerhakenförmige Riegel erfolgen, die den Rand 30 der Anschluss-Fläche 11 untergreifen, wobei es in einem solchen Fall zweckmäßig ist, dass die C- bzw. U-förmig ausgebildete Dichtung 31 bzw. 31" eingesetzt wird, wobei dann die Riegel gegen den unteren Halte-Flansch 33 anliegen würden.

Bei dem Ausführungsbeispiel nach Fig. 9 ist ein Revisions-Schacht 37 vorgesehen, der aus einem als Schachtgrundkörper dienenden Rohr 1a und einem als Verlängerung dienenden Rohr 1b besteht. Beide Rohre 1a, 1b entsprechen in ihrem Aufbau aus Außenrohr 3 mit Wellung 4 und nicht dargestelltem Innenrohr dem Rohr 1. Das obere Rohr 1b weist eine Muffe 9 auf, mittels derer die Verbindung zum unteren Rohr 1a hergestellt ist. Das obere Rohr 1b ist mit einem Deckel 38 verschlossen. Das untere Rohr 1a ist nach unten mit einem Boden 39 verschlossen.

Unmittelbar oberhalb des Bodens 39 des unteren Rohres 1a sind in der geschilderten Weise Anschlussflächen 11 ausgebildet, in die in der ebenfalls geschilderten Weise Anschluss-Stutzen 21 in mediendichter Verbindung eingesetzt sind. An diese Anschluss-Stutzen 21 sind Abwasser-Rohre 40 angeschlossen.

## Patentansprüche

1. Bausatz für eine Rohr-Verbindung,
- mit mindestens einem aus Kunststoff bestehenden Rohr (1, 1a), das
-- jeweils als Verbund-Wellrohr mit einem glatten Innenrohr (2) und einem gewellten Außenrohr (3) ausgebildet ist und
-- jeweils mindestens eine aus dem Außenrohr (3) ausgeformte flache plattenförmige Anschluss-Fläche (11) zur Ausbildung einer kreisförmigen, durch einen Rand (30) begrenzten Öffnung (19) mit einem Durchmesser (d₁₉) aufweist,
- mit mindestens einem Anschluss-Element (21) zum Anschließen jeweils eines Rohres (18, 40) an eine Anschluss-Fläche (11), das
-- einen in die Öffnung (19) einführbaren Anschluss-Abschnitt (22) mit einer Außenwand (26) mit kreisförmigem Querschnitt mit einem Durchmesser (d₂₆) aufweist,
und
- mit mindestens einem Dichtungs-Ring (31, 31', 31"), **dadurch gekennzeichnet, dass** der Dichtungs-Ring
-- einen auf die Anschluss-Fläche (11) auflegbaren oberen Flansch (32) und
-- einen zwischen dem Rand (30) und der Außenwand (26) zusammendrückbaren Dichtungs-Steg (34, 34") aufweist, dessen Durchmesser (d₃₄, d₃₆) in nicht zusammengedrücktem Zustand kleiner ist als der Durchmesser (d₂₆) der Außenwand (26) des Anschluss-Abschnitts (22).

2. Bausatz nach Anspruch 1, **dadurch gekennzeichnet,**
**dass** der Dichtungs-Ring (31, 31") einen an den Dichtungs-Steg (34, 34") anschließenden unteren Halte-Flansch (33) aufweist.

3. Bausatz nach Anspruch 1 oder 2, **dadurch gekennzeichnet,**
**dass** der Dichtungs-Ring (31") an seinem Dichtungs-Steg (34") Dichtungs-Lippen (36) aufweist.

4. Bausatz nach einem der Ansprüche 1 bis 3, **dadurch gekennzeichnet, dass** am Anschluss-Abschnitt (22) ein nach außen vorspringender Ringsteg (25) zum Andrücken des oberen Flansches (32) des Dichtungs-Rings (31, 31' 31") gegen die Anschluss-Fläche (11) ausgebildet ist.

5. Bausatz nach einem der Ansprüche 1 bis 4, **dadurch gekennzeichnet, dass** der Anschluss-Stutzen (21) mit mit dem Rohr (1, 1a) in Eingriff bringbaren Verriegelungs-Stegen (24) versehen ist.

6. Bausatz nach Anspruch 5, **dadurch gekennzeichnet,**
**dass** die Verriegelungs-Stege (24) zum Eingriff in Riegel-Aufnahmen (28) des Rohres (1, 1a) ausgebildet sind.

7. Bausatz nach Anspruch 6, **dadurch gekennzeichnet,**
**dass** die Riegel-Aufnahmen (28) in einer die Anschluss-Fläche (11) tragenden, vom Rohr (1, 1a) hochragenden Stützwand (13) ausgebildet sind.

8. Bausatz nach einem der Ansprüche 5 bis 7, **dadurch gekennzeichnet, dass** die Verriegelungsstege (24) mit nach innen vorspringenden widerhakenförmigen Riegeln (27) versehen sind.

9. Bausatz nach einem der Ansprüche 5 bis 8, **dadurch gekennzeichnet, dass** die Verriegelungs-Stege (24) elastisch auslenkbar ausgebildet sind.

10. Bausatz nach einem der Ansprüche 1 bis 9, **dadurch gekennzeichnet, dass** der Durchmesser (d₂₆) der Außenwand (26) des Anschluss-Abschnitts (22) kleiner ist als der Durchmesser (d₁₉) der Öffnung (19).

11. Verwendung eines Bausatzes nach einem der Ansprüche 1 bis 10 für eine Kanal-Rohrleitung, wobei an das jeweilige Anschluss Element (21) ein Abwasser-Zuführ-Rohr (18) anschließbar ist.

12. Verwendung des Bausatzes nach einem der Ansprüche 1 bis 10 für eine Kanal-Rohrleitung, wobei an das jeweilige Anschluss-Element (21) ein Schacht anschließbar ist.

13. Verwendung des Bausatzes nach einem der Ansprüche 1 bis 10 für einen Revisions-Schacht (37), wobei jeweils mindestens zwei Anschluss-Elemente (21) an einem als Schachtgrundkörper dienenden Rohr (1a) ausgebildet sind, an die Abwasser-Rohre (40) anschließbar sind.

## Claims

1. Construction kit for a pipe connection, comprising
- at least one pipe (1, 1a) made of plastics, each of which
-- being a corrugated composite pipe comprising a smooth internal tube (2) and a corrugated external tube (3), and
-- having at least one flat, plate-shaped connection surface (11) which is formed out of the external tube (3) for the formation of a circular opening (19) which is defined by an edge (30) and has a diameter (d₁₉),
- at least one connection element (21) for connecting one pipe (18, 40) each to a connection surface (11), said pipe (18, 40)
-- having a connection portion (22) which is insertable into the opening (19) and which has an outer wall (26) with a circular cross-section and a diameter (d₂₆),
and
- at least one sealing ring (31, 31', 31"), **characterized**
**in that** the sealing ring has
-- an upper flange (32) which is placeable on the connection surface (11) and
-- a sealing collar (34, 34") which is compressible between the edge (30) and the outer wall (26) and has a diameter (d₃₄, d₃₆) which is smaller than the diameter (d₂₆) of the outer wall (26) of the connection portion (22) when in the non-compressed state.

2. Construction kit according to claim 1, **characterized**
**in that** the sealing ring (31, 31") has a lower support flange (33) which adjoins the sealing collar (34, 34").

3. Construction kit according to claim 1 or 2, **characterized**
**in that** the sealing ring (31 ") has sealing lips (36) provided at the sealing collar (34") thereof.

4. Construction kit according to one of the claims 1 to 3, **characterized**
**in that** an outwardly protruding annular collar (25) is formed at the connection portion (22) for pressing the upper flange (32) of the sealing ring (31, 31', 31") against the connection surface (11).

5. Construction kit according to one of the claims 1 to 4, **characterized**
**in that** a connector (21) is provided with locking bars (24) that are engageable with the pipe (1, 1a).

6. Construction kit according to claim 5, **characterized**
**in that** the locking bars (24) are formed for engagement with bar holders (28) of the pipe (1, 1a).

7. Construction kit according to claim 6, **characterized**
**in that** the bar holders (28) are formed in a supporting wall (13) which supports the connection surface (11) and projects upward from the pipe (1, 1a).

8. Construction kit according to one of the claims 5 to 7, **characterized**
**in that** the locking bars (24) are provided with barb-shaped bars (27) that project inward.

9. Construction kit according to one of the claims 5 to 8, **characterized**
**in that** the locking bars (24) are elastically displaceable.

10. Construction kit according to one of the claims 1 to 9, **characterized**
**in that** the diameter (d₂₆) of the outer wall (26) of the connection portion (22) is smaller than the diameter (d₁₉) of the opening (19).

11. Implementation of a construction kit according to one of the claims 1 to 10 for a sewer pipe wherein a wastewater inlet pipe (18) is connectable to the respective connection element (21).

12. Implementation of the construction kit according to one of the claims 1 to 10 for a sewer pipe wherein a manhole is connectable to the respective connection element (21).

13. Implementation of the construction kit according to one of the claims 1 to 10 for an inspection manhole (37) wherein at least two connection elements (21) each, to which wastewater pipes (40) are connectable, are formed at a pipe (1a) which serves as a manhole base body.

## Revendications

1. Kit de montage pour connexion de tuyau,
- avec au moins un tuyau (1, 1a) en plastique
-- qui sont des tuyaux ondulés de connexion comportant une surface interne lisse (2) et une surface externe ondulée (3) et
-- présentant chacun sur la surface externe (3) au moins une surface de raccordement (11) en forme de plaque lisse pour la formation d'une ouverture (19) circulaire, délimitée par un bord (30), avec un diamètre de (d₁₉),
- avec au moins un élément de connexion (21) pour le raccordement d'un tuyau (18, 40) à une surface de raccordement (11) qui
-- présente une section de connexion (22) à faire entrer dans l'ouverture (19), avec une paroi externe (26) avec une transversale circulaire d'un diamètre (d₂₆),
et
- avec au moins une bague d'étanchéité (31, 31', 31"), **caractérisé en ce que** la bague d'étanchéité
-- présente une collerette supérieure (32) qui vient se poser sur la surface de connexion (11)
-- présente un talon d'étanchéité (34, 34") comprimable entre le bord (30) et la paroi externe (26), dont le diamètre (d₃₄, d₃₆) à l'état non comprimé, est plus petit que le diamètre (d₂₆) de la paroi externe (26) de la section de connexion (22).

2. Kit de montage selon la revendication 1, **caractérisé en ce que** la bague d'étanchéité (31, 31") présente une collerette de retenue inférieure (33) à raccorder au talon d'étanchéité (34, 34")

3. Kit de montage selon la revendication 1 ou 2, **caractérisé en ce que** la bague d'étanchéité (31") présente des lèvres d'étanchéité (36) sur son talon d'étanchéité (34").

4. Kit de montage selon l'une des revendications 1 à 3, **caractérisé en ce que** au niveau de la section de connexion (22), est formée une portée (25) saillante vers l'extérieur, servant à appuyer la collerette supérieure (32) de la bague d'étanchéité (31, 31', 31") contre la surface de raccordement (11).

5. Kit de montage selon l'une des revendications 1 à 4, **caractérisé en ce que** le bec de raccordement (21) est équipé d'une garniture de verrouillage (24) qui vient prendre sur le tuyau (1, 1a).

6. Kit de montage selon la revendication 5, **caractérisé en ce que** les garnitures de verrouillage (24) sont prévues pour l'emboîtement dans les bases de verrou (28) du tuyau (1, 1a).

7. Kit de montage selon la revendication 6, **caractérisé en ce que** les bases de verrou (28) sont formées dans une paroi de support (13) dépassant du tuyau et portant la surface de raccordement (11).

8. Kit de montage selon l'une des revendications 5 à 7, **caractérisé en ce que** les garnitures de verrouillage (24) sont équipées de verrous (27) en forme de crochets de retenue dépassant vers l'intérieur.

9. Kit de montage selon l'une des revendications 5 à 8, **caractérisé en ce que** les garnitures de verrouillage (24) élastiques peuvent être élongées.

10. Kit de montage selon l'une des revendications 1 à 9, **caractérisé en ce que** le diamètre (d₂₆) de la paroi externe (26) de la section de connexion (22) est plus petit que le diamètre (d₁₉) de l'ouverture (19).

11. Utilisation d'un kit de montage selon l'une des revendications 1 à 10 pour un conduit de tuyau, où un tuyau d'arrivée d'eaux usées (18) peut être raccordé à chaque élément de raccordement (21).

12. Utilisation d'un kit de montage selon l'une des revendications 1 à 10 pour un conduit de tuyau, où une goulotte peut être raccordé à chaque élément de raccordement (21).

13. Utilisation d'un kit de montage selon l'une des revendications 1 à 10 pour un conduit de tuyau, où sur chaque tuyau (1a) servant de corps de goulotte de base, au moins deux éléments de raccordement (21) sont prévus, sur lesquels on peut raccorder des tuyaux d'eaux usées (40).
